# EUROPEAN PATENT SPECIFICATION

(11) **EP 3 102 025 B1**
(45) Date of publication and mention of the grant of the patent: **25.04.2018**
(21) Application number: 15702591.7
(22) Date of filing: 16.01.2015
(51) Int. Cl.: A01K 1/01

(54) **METHOD AND DEVICE FOR CLEANING CUBICLES**
VERFAHREN UND VORRICHTUNG ZUR REINIGUNG VON KABINEN
PROCÉDÉ ET DISPOSITIF DE NETTOYAGE DE BOX

(30) Priority: 03.02.2014 NL 2012186
(43) Date of publication of application: 14.12.2016
(73) Proprietor: Lely Patent N.V., 3147 PB Maassluis (NL)
(72) Inventor: AGAYEV, Samir, 3147 PA Maassluis (NL); BAS, Çavlan, 3147 PB Maassluis (NL)
(74) Representative: Octrooibureau Van der Lely N.V.
(86) International application number: PCT/NL2015/050026
(87) International publication number: WO 2015/115889

(56) References cited:
- WO-A1-2007/114684
- WO-A1-2008/118006

## Description

### FIELD OF THE INVENTION

The invention relates to a method of cleaning cubicles, in particular in a free stable or shed for dairy cattle. The invention also relates to a device, in particular to an autonomous unmanned vehicle, for cleaning cubicles in a free stable for cattle.

### BACKGROUND TO THE INVENTION

In the cattle farming sector, and dairy farming in particular, the animals are accommodated in stables or barns at least for a part of the year. In a tie-stable, each animal is held in a fixed location and is fed and optionally milked there. More recently, there is a trend towards cubicle stables or free stables. The animals can walk around freely therein, and each animal can go and stand there or lie down in a cubicle and rest and/or chew the cud. Feeding and milking may take place elsewhere at a feeding fence or feeding station and a milking machine. A cubicle stable is provided with one or more rows of neighboring cubicles, and each cubicle is defined by a rear short end, an open front short side forming the entrance and exit for the animal to the cubicle, with lateral partitions extending at the long sides of the cubicle, and with a rear partition limiting the animal's movement at said rear short side. The positioning of an animal in the cubicle is such that the animal is orientated substantially parallel to the longitudinal direction of the cubicle. The floor space of a cubicle is commonly provided with a kind of matrass or covered with a dry material like straw and/or sawdust. A cubicle for dairy cattle is commonly in a range of about 1.0 to about 1.4 meters wide, more typically about 1.1 to about 1.3 meters, and up to about 2.4 meters long. The partitions or dividers are commonly formed from a metal tube construction, for instance tube parts curved in a U-shape, R-shape, P-shape or other form, which are attached to posts anchored in the floor and/or to the rear end. Furthermore, in a cubicle stable, in front of each row of cubicles, there is the barn floor, which optionally could be provided with a slatted floor. In most stables, there is in practice a small offset between the cubicle floor and the barn floor.

It is important that both the barn floor and the cubicle floors are frequently cleaned from dirt, in particular from manure. Several methods and corresponding devices are known in the art for cleaning barn floors from manure and other dirt in a stable, such as a manure slide. Some of these methods and corresponding devices allow for cleaning of the front part of the floor of a row of cubicles while simultaneously cleaning the barn floor. Cleaning of a row of cubicle floors is often done by means of rotatable brushes. A disadvantage of most of these known devices is that they require the involvement of an operator during the cleaning action. A further disadvantage is that the cubicle floors are cleaned substantially parallel to the front sides of the cubicle, and for a non-interrupted cleaning operation this requires that in a row of cubicles none of the cubicles are occupied by an animal.

In the art also methods and corresponding devices are known for cleaning individual cubicles. For example, such a device is known from US patent document US-2002/0133899-A1 (Lely) as published on 26 September 2002. The known unmanned device cleans a cubicle floor in its longitudinal direction by using a manure displacement device and can be provided further with a manure slide to clean at least a part of the slatted floor or barn floor. Detecting means are provided which are capable of observing the dirt present on the cubicle floor. WO2007/114684 A1 discloses a method and an apparatus for cleaning the floor of animal cubicle in a barn, wherein an unmanned vehicle detects the presence of a cow in a respective cubicle in a barn, and proceeds to clean the floor of the cubicle when no animal is detected to be present.

However in practice, an animal, such as a cow, can be hurt by the cleaning devices, while contrarily some non-occupied cubicles are not cleaned.

### DESCRIPTION OF THE INVENTION

It is an object of the present invention to provide a method of cleaning a cubicle in a stable while avoiding physical contact between an animal in a neighboring cubicle and any activated cleaning means cleaning the subject cubicle.

It is another object of the invention to provide a device for operating the method according to this invention.

It is yet another object of the invention to provide an autonomous unmanned vehicle for operating the method according to this invention.

These and other objects and further advantages are met or exceeded by the present invention providing a method according to claim 1. This method is adapted for cleaning at least a part of a floor of a cubicle from a row of individual cubicles in a stable, each cubicle having a floor space, an open front end for access of an animal to the cubicle and lateral partitions extending in the longitudinal direction on each side of the cubicle, the method comprising the steps of providing a sensor arrangement comprising an animal presence sensor arranged to detect the presence of an animal in a cubicle and a partitions sensor arranged to detect the lateral partitions, and providing an autonomous unmanned vehicle, the vehicle comprising a control system for controlling the operation of the vehicle and cubicle floor cleaning means for cleaning a part of the cubicle floor, which control system is operatively coupled with the sensor arrangement. In respect of the cubicle, it is noted that a rear end of the floor space of the cubicle is preferably adapted to limit an animal's movement in the direction of the rear end. The method according to the present invention further comprises the steps of detecting by an animal presence sensor a first of the cubicles free of an animal, detecting by an animal presence sensor whether an animal is present in a second of the cubicles neighboring next to the first cubicle free of an animal, generating a signal by the partitions sensor for the control system of the vehicle regarding the position of the vehicle with respect to at least a common lateral partition between the first and second cubicles, under control of the control system activating the cubicle floor cleaning means, and controlling the vehicle to clean at least a part of the floor of the first cubicle in a cleaning mode, wherein particulars of the cleaning mode are dependent on the presence of an animal in the second neighboring cubicle. Preferably, the step of cleaning the floor of the first cubicle comprises keeping at least a predetermined safety distance to the second cubicle, wherein the predetermined safety distance depends on whether an animal is detected to be present in the second neighboring cubicle. The method according to the present invention is especially suitable to be applied in the context of a stable for dairy cattle, wherein it is noted that the present invention is not limited to such context.

The present invention is at least in part based on the insight that an animal, such as a cow, lying in its cubicle may extend a leg part or a part of its back, loin or belly underneath a lateral partition and into a neighboring cubicle. In automated cleaning operations of a single cubicle, the presence of such a body part like a leg part is not necessarily always detected or possibly in error identified as dirt lying on the cubicle floor and consequently approached by an activated manure displacement device, which is a highly undesirable effect. In accordance with the invention, a cubicle floor is cleaned using the activated cleaning means of an autonomous unmanned vehicle travelling through a stable. In the cleaning operation, it is taken into account whether or not the neighboring next cubicle is occupied or not by the animal presence sensor or sensors. If it is detected that the neighboring next cubicle is unoccupied, then there is no need to apply a predetermined safety distance with respect to the lateral partition. It can therefore be selected to be very small, e.g. about 15% or less of the width of a cubicle, or it can be selected to be zero. However, if it is detected that the neighboring next cubicle is occupied, then the cubicle floor can be cleaned while staying away from the lateral partition at a predetermined safety distance. This achieves the effect that the chance of undesired physical contact between activated cubicle floor cleaning means and an animal is minimized, while the cubicle floor in its width direction is being cleaned over a large area, wherein the width direction is a direction which is normally perpendicular to the longitudinal direction of the cubicles and the lateral partitions.

In respect of cleaning a cubicle which is at an end of the row of cubicles, i.e. a cubicle which does not have a neighboring next cubicle in one direction, it is practical if such end cubicle is treated in the same way as a cubicle of which the neighboring next cubicle is unoccupied, so that the safety distance is selected to be very small, or to be zero, as explained in the foregoing. In that way, it is ensured that a part of the cubicle floor near the end of the row is involved in the cleaning process, so that it is possible to have the end cubicle cleaned along the entire width thereof.

In an embodiment of the invention, the predetermined safety distance is at least 15% of the width of an individual cubicle, and preferably at least 20%, and more preferably at least 30%. The predetermined safety distance is at most 50% of the width of an individual cubicle, and preferably at most about 45%, creating a practical operating range for the cleaning means while ensuring enhanced stable hygiene and animal safety. In general, it is a practical possibility to apply a predetermined safety distance of at least about 30 cm from the lateral partition with the second neighboring cubicle.

According to the present invention, the sensor arrangement comprises a partitions sensor besides the animal presence sensor, which partitions sensor is arranged to detect the lateral partitions, i.e. to determine where one cubicle is delimited from a neighboring cubicle, seen along a length of the cubicles. During operation of the autonomous unmanned vehicle, a signal generated by the partitions sensor is used for the purpose of positioning the vehicle with respect to the row of cubicles such that the cubicle floor cleaning means can follow a route as desired inside at least one cubicle. The signal is very well suitable to be used for the purpose of realizing in practice the correct safety distance. As the safety distance in one cubicle is defined with respect to a neighboring cubicle, it is very advantageous to actually detect the lateral partitions between the cubicles. Determining the position of the vehicle with respect to a relevant partition is done while taking the safety distance into account, and the movement of the vehicle down the row of cubicles can be controlled in an accurate manner if the partitions are detected. In any case, according to the present invention, the partitions are used as references in the process of navigating the vehicle. The partitions sensor may comprise any suitable means for realizing the function of detecting the lateral partitions. Examples of such means include a camera mounted on the vehicle and an ultrasound sensor mounted on the vehicle, wherein, for the sake of completeness, it is noted that means which are not mounted on the vehicle are also feasible.

In general, within the framework of the present invention, it is possible for the sensor arrangement to be adapted to detect parts of animals extending from a cubicle in which the animals are lying into a neighboring cubicle, and to use this information in determining a safety distance for a cleaning action to be performed in that neighboring cubicle. Hence, if an animal is detected to be present in the second neighboring cubicle, the method according to the present invention may involve a step of further using the sensor arrangement to detect whether parts of the animal are extending into the first cubicle, wherein the predetermined safety distance also depends on whether parts of the animal are detected to be present in the first cubicle. Furthermore, if at least one animal part is detected to be present in the first cubicle, it is advantageous if the sensor arrangement is further capable of detecting an extent to which the animal part into the first cubicle, so that the sensor arrangement can be further used for actually performing such detecting action, wherein the predetermined safety distance also depends on the detected extent to which the animal part extends into the first cubicle. In such case, the safety distance is chosen such to at least meet a requirement of being larger than the detected extent to which the animal part extends into the first cubicle. An advantage of performing further detecting actions is that the safety distance can be optimized, and the part of the cubicle floor to be cleaned can be maximized. In particular, in a situation in which no animal parts are detected to be present in the first cubicle, a default value which is as small as possible can be chosen in respect of the safety distance, which may be smaller than 15% of the cubicle width as mentioned earlier, for example, 10% of the cubicle width, or 5% of the cubicle width, whereas in a situation in which at least one animal part is detected to be present in the first cubicle, a larger value of the safety distance can be chosen such as to avoid contact between the cleaning means which are used in a cleaning action and the animal part, which would otherwise occur when the default value would be chosen.

In an embodiment, the cubicle(s) is/are cleaned over a distance from the cubicle front end up to about 20% of the length of an individual cubicle, preferably up to about 25%, and more preferably up to about 35%. In practice, the manure is mostly accumulated at a front area of a cubicle, and the cleaning operation can be limited to that area accordingly. However, the cleaning means can be activated also to clean a larger area into a cubicle, and if necessary in the longitudinal direction up to the rear short end of the cubicle. This will allow also the removal of any dirty dry material lying on the cubicle floor, which may be replenished thereafter with fresh dry material.

In an embodiment of the invention, if no animal is detected to be present in the second neighboring cubicle, at least a part of both the first and second cubicle floor is cleaned in an area from the common lateral partition between the first and second cubicles and extending at most until a predetermined safety distance from each of second lateral partitions of the first and second cubicles opposite to the common lateral partition. Preferably, in such embodiment, the safety distance is selected as if an animal is present in the neighboring cubicles having the second lateral partition in common with the respective first and second cubicle.

Especially in case an operational width of the cubicle floor cleaning means is at least the same as the width of each of the cubicles, this achieves the effect that in each cleaning operation, the cubicle floor of two neighboring unoccupied cubicles is cleaned over 50% or more of the width of each of the individual unoccupied cubicles, wherein it may be so that a cleaning operation involves only one cleaning stroke, i.e. a single movement of the cubicle floor cleaning means in and out of the first and second cubicles, and wherein this cleaning operation is performed at a sufficiently safe distance from the second lateral partitions. In this way, the chance of undesired physical contact between activated cleaning means and an animal in the occupied cubicle is minimized, while the individual cubicle floor of each of the unoccupied cubicles in its width direction is cleaned for 50% or more. It is ensured also that the area near and underneath a common lateral partition is frequently cleaned, thereby enhancing stable hygiene. The non-cleaned part of a cubicle floor can be cleaned at a next occasion when the subject cubicle and its opposite counterpart are unoccupied. As a result, a cubicle floor of an individual cubicle is cleaned in full in two separate in time spaced apart cleaning operations using the autonomous unmanned vehicle equipment in accordance with this invention. Since such an autonomous unmanned vehicle can travel continuously through a stable and animals are frequently leaving their cubicles for milking and/or feeding at another location in the stable, over a longer period of time each individual cubicle floor can be cleaned in full. The method of this invention allows on a statistical basis that each individual cubicle floor of all cubicles in a stable are being cleaned over their full width direction at a frequency of at least two or three times a day creating a sufficiently clean environment with good safety for the animals.

In an embodiment, the cubicle floor cleaning means are centered with respect to the common lateral partition. In practice, this can be done in several ways, such as the use of reference points near or at a lateral partition or based on the vision from a preinstalled camera above the row of cubicles, or it can be based on a pre-set route of the autonomous unmanned vehicle.

In another embodiment, the autonomous unmanned vehicle is controlled to clean at least a part of both the first and second cubicle floor in two cleaning strokes, wherein the cubicle floor cleaning means are moved in and out of the first and second cubicles at least two times, and wherein, in one of the two cleaning strokes, at least an area comprising at least a part of the first cubicle floor and the floor underneath the common lateral partition is cleaned, and wherein, in the other of the two cleaning strokes, at least an area comprising at least a part of the second cubicle floor and the floor underneath the common lateral partition is cleaned. This way of doing is especially applicable when the operational width of the cubicle floor cleaning means is smaller than the width of each of the cubicles. For example, a cubicle may have a width which is about 1.0 meters, whereas an embodiment of the vehicle is feasible in which the operational width of the cubicle floor cleaning means is in a range of about 0.65 to about 0.7 meters, wherein the vehicle can be about 0.8 meters wide. In such a case, it is practical to clean at least a part of both the first and second cubicle floor in two cleaning strokes.

Preferably, an area which is cleaned in the first stroke and an area which is cleaned in the second stroke overlap, so that it is ensured that a total, uninterrupted area is cleaned. In this respect, it is noted that it is very practical for an overlap area to have a central position with respect to the common lateral partition. Hence, the areas which are cleaned during the respective cleaning strokes may be mirrored with respect to each other about the common lateral partition. Depending on the width of the cubicle floor cleaning means with respect to the width of the cubicles, it may be so that during a first cleaning stroke, only a part of the first cubicle floor and the floor underneath the common lateral partition are cleaned, and that during a second cleaning stroke, only a part of the second cubicle floor and the floor underneath the common lateral partition are cleaned, in which case the overlap area is constituted by the floor underneath the common lateral partition. In a case of cubicles having a relatively small width, it may even be so that during a first cleaning stroke, a part of the first cubicle floor, the floor underneath the common lateral partition and a part of the second cubicle floor are cleaned, and that during the second cleaning stroke, a part of the second cubicle floor, the floor underneath the common lateral partition and a part of the first cubicle floor are cleaned, wherein the part of the first cubicle floor which is cleaned during the first cleaning stroke is larger than the part of the first cubicle floor which is cleaned during the second cleaning stroke, and wherein the part of the second cubicle floor which is cleaned during the second cleaning stroke is larger than the part of the second cubicle floor which is cleaned during the first cleaning stroke. For the sake of completeness, it is noted that in such a case, the overlap area is larger than just an area underneath the common lateral partition.

In order to enhance the cleaning operation, it is preferred that any lateral partition holds as few obstacles as possible for performing the cleaning operation in accordance with the invention. In case the lateral partition comprises a post supporting onto the cubicle floor, it is preferred that any such post is located as much as possible near the rear short end of the cubicle. More preferably, the lateral partition is devoid of any support posts attached to or supporting onto the cubicle floor. This can be achieved by a one-sided suspension, anchoring or hinging of the lateral partition to or near the rear end of the cubicles, as is well known in the art. This allows that on a frequent basis, the entire cubicle floor underneath the lateral partition can be cleaned using the method and corresponding autonomous unmanned vehicle according to this invention.

The animal presence sensor for detecting the presence of an animal, such as a cow, in a cubicle, is preferably selected from the group comprising laser means, infrared means, radiographical means, induction means, and a camera. As camera e.g. a 2D or 3D camera, and a thermal camera can be applied. In the method and the corresponding vehicle according to this invention, one or more sensors can be applied.

In an embodiment, the animal presence sensor for detecting the presence of an animal in a cubicle is included in the autonomous unmanned vehicle. Although sophisticated sensors can be applied, in practice also less accurate but robust sensors can be applied. The latter can be very advantageous in an agronomic environment like a dairy farm. It has merely to be determined whether a relatively large voluminous object, such as a cow, is present on a relatively small floor space of about 2 to 2.5 square meters. For example a quick scan, over for example the centerline of a cubicle or over the width near about the center of the cubicle, can suffice to determine whether a cubicle is occupied. This can be done, amongst others by means of laser sensors, ultrasound sensors, infrared thermometers, and 2D or 3D cameras.

It is advantageous for an animal presence sensor as included in the autonomous unmanned vehicle to have a viewing range of two neighboring cubicles. The fact is that with such a sensor, it is possible to detect if two neighboring cubicles are occupied by an animal, if only a first cubicle is occupied by an animal and a second cubicle is not, if only a second cubicle is occupied by an animal and a first cubicle is not, or if two neighboring animals are free, without a need of displacing the vehicle in the detection process. The information obtained by the sensor with the vehicle in place is sufficient for determining whether it is possible to take a cleaning action, and if yes, which particulars can be chosen in respect of the cleaning mode to be realized.

In an alternative embodiment, the animal presence sensor is located in or near each cubicle. This can be done by various methods known in the art, e.g. using a tag attached to an animal, which tag can be read by dedicated reading means and create a signal once an animal is within a certain range of e.g. the rear short end of a cubicle. In general, the function of the animal presence sensor can be realized by an animal locator system which includes actual information of the whereabouts of each animal in a stable.

In both embodiments, viz. included in or remote from the vehicle, the sensor is able to generate signals based on the presence or absence of an animal. These signals are communicated with a computer system and converted into a position or location of an individual cubicle or neighboring next cubicles free from animals. After a position of the cubicle(s) has been determined, under control of the control system the autonomous unmanned vehicle is positioned with respect to the subject cubicle(s), and thereafter the cubicle floor cleaning means are activated.

The computer system can be located in or near the barn, and can be adapted to communicate with the control system of the autonomous unmanned vehicle, e.g. by using communication means known in the art, wherein the signals are monitored continuously or at regular intervals. Alternatively, the computer system can be integrated in the control system of the autonomous unmanned vehicle.

In a preferred embodiment, the cubicle floor cleaning means comprise a manure displacing device. The manure displacing device may comprise a telescopic carrier and/or a hingeable arm construction. In a further preferred embodiment, the manure displacing device comprises a manure slide which is preferably made of rubber or synthetic material. To enhance the cleaning operation, preferably the manure displacing device comprises pressure setting means with the aid of which the force is set with which the manure displacing device is active on the cubicle floor. It is also possible to provide the manure displacing device with motor-drivable manure displacing members. The motor-drivable manure displacing members have the advantage that, during the cleaning operation, these do not require to be pressed on the cubicle floor with considerable force, like a manure slide.

In an embodiment, the manure displacing device comprises one or more rotatable brushes.

In another embodiment, the manure displacing device comprises a compressed air unit and/or a spraying unit by means of which the cubicle floor is cleaned with compressed air and/or liquid.

In another embodiment, the manure displacing device comprises means applying a vacuum operation.

Also, a combination of manure displacing means can be applied, for example a combination of rotatable brushes and compressed air, see for example US patent document US-5,951,782 (Truitt) issued on September 14, 1999.

In accordance with the method and corresponding autonomous unmanned vehicle of the invention, the cubicle floor cleaning means, e.g. a manure slide, can have an operational width of more than the width of an individual cubicle. In that case, the operational width is preferably less than 85% of twice the cubicle width, preferably less than 80%, and more preferably less than 70%. This would mean in practice for a dairy cattle stable having a typical cubicle width of about 1.1 m an operational width in a range of about 1.1 to about 1.85 meters, and more preferably of about 1.2 to about 1.5 meters, for example about 1.25 or about 1.4 meters. Such an operational width can be obtained using for example a single manure slide which is activated to clean overlapping floor areas, or a single wide manure slide, or using two or more slides working together and having an overlapping working range.

In respect of the possibility of the cubicle floor cleaning means having an operational width which is smaller than the cubicle width, it is noted that the operational width may be less than 75% of the cubicle width, or less than 60%, or even less than 55%. This would mean in practice for a dairy cattle stable having a typical cubicle width of about 1.1 m an operational width in a range of about 0.6 to about 0.8 meters.

To further enhance the stable hygiene, the cubicle floor cleaning means may further comprise disinfecting means such as a spraying unit. With the aid of the spraying unit, it is possible to spray a cleaning and/or a disinfecting liquid over the already cleaned cubicle floor. A favorable location for such disinfecting means is on or near said cleaning means, such as a manure displacing device. The autonomous unmanned vehicle can be adjusted to carry one or more reservoirs comprising such cleaning and/or a disinfecting liquids. The autonomous unmanned vehicle can be equipped also with other payload.

In an embodiment, the autonomous unmanned vehicle may further comprise means for detecting the presence of manure and/or dirt, which means can comprise a camera, such as for example an infrared camera. It is further possible for the detection means to comprise a humidity meter with the aid of which the electric conductivity is determined on a cubicle floor. By means of a dielectric measurement it is possible to determine whether the cubicle floor is contaminated with manure. 3D cameras or image processing from 2D images can also be used.

The means for detecting the presence of manure and/or dirt may generate a signal to the control system based upon which a decision can be made whether or not to clean the subject first and second cubicle floors in the defined area. In case no manure and/or dirt is being detected and in order to save cleaning time, the control system may decide to direct the autonomous unmanned vehicle to a next unoccupied cubicle for cleaning the cubicle floor.

In a further embodiment, the autonomous unmanned vehicle may further comprise means for detecting the presence of manure and/or dirt, wherein said means are also capable of determining the location of the manure or dirt at the cubicle floor. Knowing the location of the manure or dirt on the cubicle floor, the control system can determine how far from the front end of the first and second cubicle the cubicle floor should be cleaned, for example only the first quarter of the cubicle length or up to the end of the cubicle, and the cleaning means are activated accordingly. This will significantly enhance the time efficiency of the cleaning operation.

In an embodiment, the autonomous unmanned vehicle further comprises a stable route planner. This allows the vehicle to continuously travel through a barn using a pre-set frequency and route such that over a period of time, for example one day, each cubicle and its neighboring cubicle are checked for the absence of animals and cleaned accordingly. This may ensure that each cubicle is fully cleaned at least once a day or at any desired higher frequency.

In an embodiment, the autonomous unmanned vehicle further comprises means for determining the vehicle's position in a stable. Such navigation means allow amongst others to track the cleaning frequency of each individual cubicle throughout a day, to generate and feed data in order to calculate the optimum cleaning routes for a cleaning shift, and to create cleaning priorities for each cubicle according to their cleaning frequencies.

In another aspect of the invention, there is provided an autonomous unmanned vehicle that is adapted for use in a stable, particularly for cleaning at least a part of a floor of a cubicle from a row of individual cubicles in a stable, wherein the vehicle comprises a control system for controlling the operation of the vehicle, the control system being arranged to receive a first input signal from an animal presence sensor arranged to detect the presence of an animal in a cubicle, the first input signal being related to the presence of an animal in a first of the cubicles and further related to the presence of an animal in a second of the cubicles neighboring next to the first cubicle, and the control system being arranged to receive a second input signal from a partitions sensor arranged to detect lateral partitions extending in the longitudinal direction between the cubicles, the second input signal being related to the position of the vehicle with respect to at least a common lateral partition between the first and second cubicles, the vehicle further comprising cubicle floor cleaning means under control of the control system for cleaning a part of the cubicle floor, wherein the control system is capable of controlling the cubicle floor cleaning means to clean at least a part of the first cubicle in a cleaning mode, and wherein particulars of the cleaning mode are dependent on the presence of an animal in the second neighboring cubicle. Preferably, the autonomous unmanned vehicle is capable of controlling the cubicle floor cleaning means to keep at least a predetermined safety distance to the second cubicle, wherein the predetermined safety distance depends on whether an animal is detected to be present in the second neighboring cubicle.

In an embodiment of the autonomous unmanned vehicle, if no animal is detected to be present in the second cubicle, the control system is capable of controlling the cubicle floor cleaning means to clean at least a part of the second cubicle besides the at least a part of the first cubicle, in an area from the common lateral partition between the first and second cubicles and extending at most until a predetermined safety distance from each of second lateral partitions of the first and second cubicles opposite to the common lateral partition. According to a first possibility associated with this embodiment, the control system is capable of centering the cubicle floor cleaning means with respect to the common lateral partition. According to a second possibility associated with this embodiment, the control system is capable of controlling the vehicle to clean at least a part of both the first and second cubicle floor in two cleaning strokes and to move the cubicle floor cleaning means in and out of the first and second cubicles at least two times in the process, wherein the control system is capable of controlling the cubicle floor cleaning means to clean at least an area comprising at least a part of the first cubicle floor and the floor underneath the common lateral partition in one of the two cleaning strokes, and to clean at least an area comprising at least a part of the second cubicle floor and the floor underneath the common lateral partition in the other of the two cleaning strokes.

The autonomous unmanned vehicle is provided with a control system managing the operation of the vehicle.

For its locomotion, the autonomous unmanned vehicle can include wheels driven by a motor. Preferably, each of the wheels is individually driven by a motor. By driving the wheels at a different velocity, it is possible to steer the autonomous unmanned vehicle.

In an embodiment of the invention, the operational width is more than the width of an individual cubicle, but preferably less than 85% of twice the cubicle width, preferably less than 80%, and more preferably less than 70%, creating a practical operating range for the cleaning means while ensuring enhanced stable hygiene and animal safety.

In an embodiment, the operational width of the cubicle floor cleaning means is in a range of about 1.1 to about 1.85 m, and preferably of about 1.2 to about 1.5 m, for example about 1.3 m.

In another embodiment of the invention, the operational width of the cubicle floor cleaning means is less than 75% of the cubicle width, or less than 60%, or even less than 55%. In such case, assuming a cubicle width of about 1.1 m, the operational width may be in a range of about 0.6 to about 0.8 meters.

The autonomous unmanned vehicle can include at least one animal presence sensor for detecting the presence of an animal, such as a cow, in a cubicle, which is preferably selected from the group comprising laser means, infrared means, radiographical means, and induction means. The sensor is able to generate signals based on the presence or absence of an animal. These signals are communicated with a computer system or directly with the control system and converted into a position of two neighboring unoccupied cubicles. After a position of the neighboring first and second cubicles has been determined, under control of the control system the cubicle floor cleaning means are centered with respect to the subject cubicles, and activated.

Alternatively, the autonomous unmanned vehicle is equipped to receive a signal from at least one animal presence sensor at a location remote from the vehicle itself. The received signal is communicated with the vehicle control system, and in accordance with the invention under control of the control system the respective cleaning means are activated.

The autonomous unmanned vehicle can include a stable route planner. This allows the vehicle to travel through a stable at a pre-set frequency and route such that over a period of time, for example one day, each cubicle and its neighboring cubicle are checked for the absence of animals and cleaned accordingly. This may ensure that each cubicle is fully cleaned at least once a day or at any desired higher frequency.

The autonomous unmanned vehicle can include means for determining the vehicle's position in a stable.

The autonomous unmanned vehicle can include means for detecting the presence of manure and/or dirt, which means can comprise a camera, such as for example an infrared camera. It is further possible for the detection means to comprise a humidity meter with the aid of which the electric conductivity is determined on a cubicle floor. By means of a dielectric measurement, it is possible to determine whether the cubicle floor is contaminated with manure. The means for detecting the presence of manure and/or dirt may generate a signal to the control system based upon which a decision can be made to clean the subject cubicle floors. In case no manure and/or dirt is being detected and in order to save cleaning time, the control system may decide to direct the autonomous unmanned vehicle to next neighboring empty cubicles for cleaning the cubicle floors.

Some further embodiments and preferred embodiments of the autonomous unmanned vehicle are herein described when discussing the various embodiments of the method according to this invention.

The invention will now be illustrated with reference to non-limiting figures and embodiments according to the invention, in which:
Fig. 1 shows a schematic top view of a row of cubicles for dairy cattle;
Fig. 2 illustrates relevant dimensions of the cubicles and diagrammatically shows an area of two neighboring cubicles as covered by cubicle floor cleaning means of a first embodiment of an autonomous unmanned vehicle used for the purpose of cleaning at least a part of the cubicle floor; and
Fig. 3 also illustrates relevant dimensions of the cubicles, and furthermore illustrates movements of the cubicle floor cleaning means of a second embodiment of the vehicle in and out of the cubicles and diagrammatically shows areas of the cubicles as cleaned by the cleaning means.

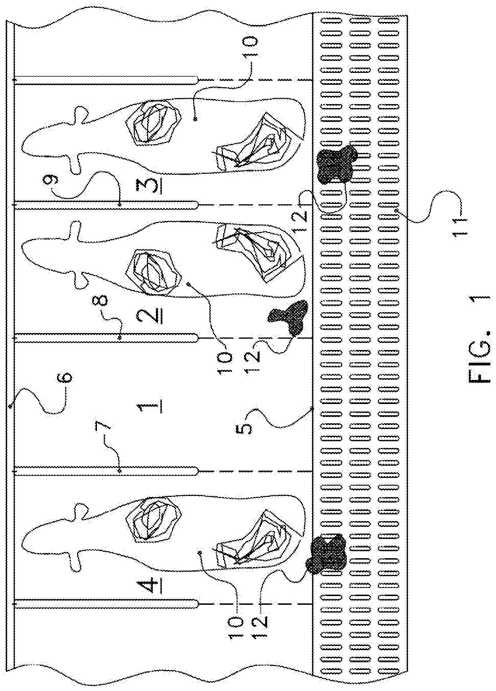

Figure 1 shows in a top view a row of individual cubicles 1, 2, 3, 4, wherein each cubicle has an open front end 5, a rear short end 6 and in the longitudinal direction partitions 7, 8, 9 between the cubicles 1, 2, 3, 4. The positioning of an animal, for example a cow 10, is such that the animal is orientated substantially parallel to the longitudinal direction of the cubicle 1, 2, 3, 4. There is provided a barn floor 11 in front of the row of cubicles 1, 2, 3, 4, and in this non-limitative example the barn floor 11 is formed by a slatted floor. Cow manure 12 can be located on the barn floor 11 or on the cubicle floor, both of which need to be cleaned on a frequent basis.

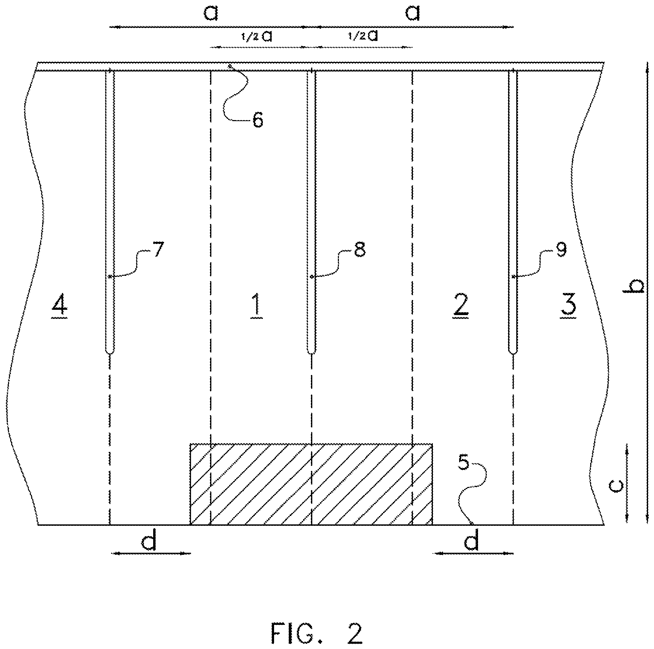

Figure 2 shows a top view of two empty neighboring cubicles 1, 2. The two neighboring cubicles 1, 2 share a common lateral partition 8, and each cubicle 1, 2 has a second lateral partition 7, 9 opposite to the common lateral partition 8. The width of each individual cubicle 1, 2 is of dimension "a" and the length of each individual cubicle 1, 2 is of dimension "b".

In accordance with the invention, an empty cubicle is located and approached by an autonomous unmanned vehicle for cleaning (not shown), using the activated cubicle floor cleaning means of said vehicle. If it is detected that the next neighboring cubicle is not occupied, then there is no danger for any undesired physical contact between the activated cubicle floor cleaning means and a body part of an animal that may extend underneath the second, opposite lateral partition 7, 9 into the cubicle that is subject to a cleaning operation. In that case, a predetermined safety distance "d" can be selected to be very low, and can even be zero, such that the cubicle floor is being cleaned as good as possible. However, if it is detected that the next neighboring cubicle is occupied by an animal, then the cubicle has to be cleaned while keeping a safe distance from the common lateral partition 8 to ensure that any undesired physical contact is avoided between the activated cubicle floor cleaning means and a body part of the animal in the neighboring cubicle. For dairy cattle stables and corresponding cubicles, it may be practical to use a predetermined safety distance of at least about 0.3 m, which does not alter the fact that other values of the safety distance are feasible within the framework of the present invention as well.

In accordance with an embodiment of the invention, the floor of two unoccupied neighboring cubicles is cleaned using the activated cubicle floor cleaning means of the autonomous unmanned vehicle of this invention, wherein the cleaned area is schematically shown by the oblique stroked area in Figure 2. The cleaned area is centered preferably with respect to the common lateral partition 8 and extends in longitudinal direction from both cubicle's front end 5 over a distance having dimension "c". The cleaned cubicle floor area in its transverse direction extends from the centerline defined by the common lateral partition 8 up to the predetermined safety distance "d" from each of the second lateral partitions 7, 9, thereby defining also the operational width of the applied cleaning means. The cleaned cubicle floor area has such dimensions that it covers at least half of the width of each of both neighboring, unoccupied cubicles 1, 2.

In a dairy cattle barn, a typical cubicle width "a" is about 1.1 m, and in accordance with a first embodiment of the invention, the cubicle floor cleaning means have an operational width in a range of about 1.1 to about 1.85 m, and more preferably of about 1.2 to about 1.5 m, for example about 1.3 m. Using the example of a cubicle width "a" of 1.1 m and an operational width of the cleaning means of about 1.3 m, when the cleaning means are centered with respect to the position of the common lateral partition 8, the activated cleaning means will clean an area extending about 0.65 m on both the left and right side of the common lateral partition. In this way, the floor of each of the neighboring, unoccupied cubicles is cleaned over more than 50% of its width while staying sufficiently far away, namely about 0.45 m, from the second lateral partition 7, 9 opposite to the common lateral partition 8. By creating such a safety distance such as of about 0.3 m to about 0.4 m from the second, opposite lateral partition 7, 9, it is ensured that any undesired physical contact is avoided between the activated cubicle floor cleaning means and a body part of an animal that may extend underneath the second lateral partition 7, 9 into the unoccupied cubicle adjacent the second lateral partition that is subjected to a cleaning operation. It leaves the subject cubicle floors of the neighboring, unoccupied cubicles 1, 2 cleaned over more than 50% of their respective widths. The remaining part of the floor of e.g. cubicle 2 of Figure 2 can be cleaned in a subsequent cleaning operation such as in accordance with the present invention, once it has been detected that the cubicle 2 and its opposite counterpart e.g. cubicle 3 of Figure 2 are both unoccupied and thus available for a cleaning operation as described above with respect to cubicles 1 and 2. Using the method and the corresponding autonomous unmanned vehicle according to this invention, it can be ensured that on a statistical basis each individual cubicle is being cleaned at any pre-set frequency, e.g. three times a day.

To what extent the subject cubicle(s) are cleaned in their length ("c" dimension in Figure 2) or longitudinal direction can be adjusted also in accordance with the invention. It can be up to a pre-set distance of for example 25% of the cubicle length, and with preferred wider ranges, or it can be over the whole length of the cubicle. Alternatively, it can be decided upon on a case-by-case basis, for example based on a signal generated by means for detecting the presence of manure and/or dirt arranged to detect also the location of any such manure or dirt.

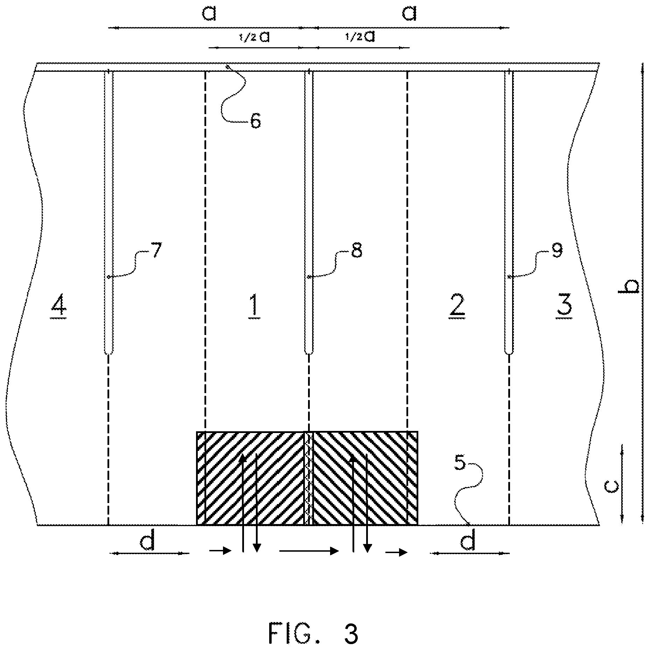

Figure 3 relates to a second embodiment of the autonomous unmanned vehicle, particularly an embodiment in which the operational width of the cleaning means of the vehicle is smaller than the cubicle width "a". For example, the operational width of the cleaning means may be 0.65 m, while the cubicle width "a" may be 1.1 m as mentioned in the foregoing. Furthermore, an overall width of the vehicle may be 0.7 m. In such case, in order to ensure that cubicle floors of two neighboring, unoccupied cubicles 1, 2 are cleaned over more than 50% of their respective widths, and that a cleaned area is obtained which is centered with respect to the common lateral partition 8 between the cubicles 1, 2, like the cleaned area as depicted in Figure 2, the cleaning means of the vehicle are controlled such as to perform two movements in and out of the cubicles 1, 2, which are mirrored with respect to each other about the common lateral partition 8. For the sake of completeness, it is noted that it is practical and preferred to have the central positioning of the cleaned area with respect to the common lateral partition 8 as illustrated in both Figure 2 and Figure 3, but it is not essential within the framework of the present invention.

In Figure 3, directions of movements as made by the cleaning means for the purpose of realizing cleaned areas as desired are indicated by means of arrows, and the cleaned areas are schematically shown by oblique stroked areas. In a first cleaning stroke, the cleaning means are moved in and out the first cubicle 1 in the longitudinal direction. In particular, in the first cleaning stroke, the vehicle is positioned in such a way with respect to the common lateral partition 8 that the cleaning means cover the floor underneath the common lateral partition 8 and a neighboring part of the floor of the first cubicle 1. Assuming that the width of the common lateral partition 8 is 0.05 m, this implies that a cleaned width of the first cubicle 1 is 0.6 m, while a safety distance "d" with respect to the second lateral partition 7 of the first cubicle 1 opposite to the common lateral partition 8 is 0.5 m. After the first cleaning stroke has been made, the vehicle is controlled such as to move to a further position down the row of cubicles, in a direction from the first cubicle 1 to the second cubicle 2, until the vehicle is in a correct position for making a second cleaning stroke, which is such a position with respect to the common lateral partition 8 that the cleaning means cover the floor underneath the common lateral partition 8 and a neighboring part of the floor of the second cubicle 2. Starting from that position, the cleaning means are moved in and out of the second cubicle 2 in the longitudinal direction. Hence, a cleaned width of the second cubicle 2 is 0.6 m, while a safety distance "d" with respect to the second lateral partition 9 of the second cubicle 2 opposite to the common lateral partition 8 is 0.5 m. The longitudinal dimension "c" of the cleaned area may be 0.75 m, for example.

In the process of cleaning the first and second cubicles 1, 2, the floor underneath the common lateral partition 8 is cleaned twice. Hence, there is an overlap area, which in this case comprises the floor underneath the common lateral partition 8, having a width of 0.05 m. In general, according to the present invention, when a cleaning action comprises more than one cleaning stroke, it is preferred to have an overlap area between two successive cleaning strokes, so that a total area which is cleaned is free from interruptions.

Furthermore, in the process of cleaning the first and second cubicles 1, 2, use is made of a partitions sensor adapted to detect the lateral partitions for ensuring a correct positioning of the vehicle, particularly the cleaning means of the vehicle, with respect to the cubicles 1, 2, 3, 4. The partitions sensor may be arranged on the vehicle, but this is not necessary within the framework of the present invention. In any case, with the help of the partitions sensor, the positioning of the lateral partitions 7, 8, 9 can be known, which information is very well suitable to be used for navigating the vehicle, in view of the fact that a position of the cleaning means of the vehicle in a width direction is determined with respect to the lateral partitions 7, 8, 9. By using the partitions sensor, information about the positioning of the lateral partitions 7, 8, 9 is readily available, so that the lateral partitions 7, 8, 9 can be used as references in the process of controlling the vehicle such as to follow a predetermined route down the row of cubicles, and also to guarantee a correct positioning of the cleaning means inside the cubicles. Furthermore, by using the partitions sensor, the cubicle width "a" can be determined in an accurate manner.

While various embodiments of the present invention have been described in detail, it is apparent that modifications and adaptations of those embodiments will occur to those skilled in the art. However, it is expressly understood that such modifications and adaptations are within the scope of the present invention.

It is noted that in case a vehicle is provided having cleaning means which are broader than each of the cubicles, it is also possible to let the vehicle perform two cleaning strokes having a certain overlap for the purpose of cleaning two neighboring empty cubicles, depending on the values of the cubicle width "a", the width of the cleaning means and the required safety distance "d". In that way, it is possible to realize a relatively small safety distance "d" to the second lateral partitions of the cubicles if so desired.

Within the framework of the present invention, the number of cleaning strokes in a cleaning action may be larger than just one or two if so desired. Furthermore, a cleaning stroke may be repeated if a detection of the state of the cubicle floor demonstrates that predetermined cleaning standards are not complied with.

As has been mentioned in the foregoing, it is preferred to have overlap in the width direction between two successive cleaning strokes. The overlap area may be smaller or larger than the example provided in the foregoing on the basis of Figure 3. A safety distance "d" of 0.5 m as applicable to the example is rather large and can be chosen such as to be smaller, especially in case means are used for detecting the presence of parts of animals extending into a cubicle from a neighboring cubicle, underneath the partition between the cubicles, and the entire cubicle to be subjected to a cleaning action appears to be free. A significantly smaller safety distance "d", for example, a distance of just 0.2 m, may be realized by moving the cleaning means three times in and out of the two neighboring cubicles to be cleaned, at three different positions in the width direction. Hence, it is possible to have more than one overlap area.

When the operational width of the cleaning means of the vehicle is smaller than the cubicle width "a", it is possible to clean just a single cubicle, even in case the neighboring cubicles on both sides of the cubicle are occupied by animals. The cleaning means are preferably moved in and out of the cubicle at a central position in the width direction, wherein a cleaning action can be performed in a safe manner as long as the distance between the cleaning means and each of the partitions delimiting the cubicle constitutes a sufficiently large safety distance "d". On the other hand, depending on the values of the cubicle width "a", the width of the cleaning means and the required safety distances "d" at the one side of the cubicle and the other side, which may be mutually different, it may even be so that a cleaning action of a single cubicle involves two cleaning strokes.

## Claims

1. A method of cleaning at least a part of a floor of a cubicle from a row of individual cubicles (1, 2, 3, 4) in a stable, each cubicle having a floor space, an open front end (5) for access of an animal (10) to the cubicle and lateral partitions (7, 8, 9) extending in the longitudinal direction on each side of the cubicle, the method comprising the steps of providing a sensor arrangement comprising an animal presence sensor arranged to detect the presence of an animal in a cubicle and a partitions sensor arranged to detect the lateral partitions (7, 8, 9), and providing an autonomous unmanned vehicle, the vehicle comprising a control system for controlling the operation of the vehicle and cubicle floor cleaning means for cleaning a part of the cubicle floor, which control system is operatively coupled with the sensor arrangement, and the method further comprising the steps of detecting by an animal presence sensor a first of the cubicles free of an animal, detecting by an animal presence sensor whether an animal is present in a second of the cubicles neighboring next to the first cubicle free of an animal, generating a signal by the partitions sensor for the control system of the vehicle regarding the position of the vehicle with respect to at least a common lateral partition (8) between the first and second cubicles, under control of the control system activating the cubicle floor cleaning means, and controlling the vehicle to clean at least a part of the floor of the first cubicle in a cleaning mode, wherein particulars of the cleaning mode are dependent on the presence of an animal in the second neighboring cubicle.

2. Method according to claim 1, wherein the step of cleaning the floor of the first cubicle comprises keeping at least a predetermined safety distance ("d") to the second neighboring cubicle, and wherein the predetermined safety distance ("d") depends on whether an animal is detected to be present in the second neighboring cubicle.

3. Method according to claim 2, wherein if an animal is detected to be present in the second neighboring cubicle, the predetermined safety distance ("d") is at least 15% of the width of an individual cubicle, and preferably at least 20%, and more preferably at least 30%, and at most 50% of the width of an individual cubicle,
and preferably at most about 45%.

4. Method according to claim 2, wherein if an animal is detected to be present in the second neighboring cubicle, the sensor arrangement is further used to detect whether parts of the animal are extending into the first cubicle, and wherein the predetermined safety distance ("d") also depends on whether parts of the animal are detected to be present in the first cubicle.

5. Method according to claim 4, wherein if at least one animal part is detected to be present in the first cubicle, the sensor arrangement is further used to detect an extent to which the animal part extends into the first cubicle, and wherein the predetermined safety distance ("d") also depends on the detected extent to which the animal part extends into the first cubicle, and at least meets a requirement of being larger than the detected extent to which the animal part extends into the first cubicle.

6. Method according to claim 2, wherein if no animal is detected to be present in the second neighboring cubicle, the predetermined safety distance ("d") is in a range of 0 to 15% of the width of an individual cubicle.

7. Method according to claim 1, wherein if no animal is detected to be present in the second neighboring cubicle, at least a part of both the first and second cubicle floor is cleaned in an area from the common lateral partition (8) between the first and second cubicles and extending at most until a predetermined safety distance ("d") from each of second lateral partitions (7, 9) of the first and second cubicles opposite to the common lateral partition (8), and wherein the safety distance ("d") is selected as if an animal is present in the neighboring cubicles having the second lateral partition (7, 9) in common with the respective first and second cubicle.

8. Method according to claim 7, wherein the cubicle floor cleaning means are centered with respect to the common lateral partition (8).

9. Method according to claim 7, wherein the autonomous unmanned vehicle is controlled to clean at least a part of both the first and second cubicle floor in two cleaning strokes, wherein the cubicle floor cleaning means are moved in and out of the first and second cubicles at least two times, wherein, in one of the two cleaning strokes, at least an area comprising at least a part of the first cubicle floor and the floor underneath the common lateral partition (8) is cleaned, and wherein, in the other of the two cleaning strokes, at least an area comprising at least a part of the second cubicle floor and the floor underneath the common lateral partition (8) is cleaned.

10. Method according to any one of claims 1 to 9, wherein cleaning a cubicle involves cleaning the floor of the cubicle over a distance from the front end up to about 20% of the length of the cubicle, and preferably up to about 25% of the length of the cubicle, and more preferably up to about 35% of the length of the cubicle.

11. An autonomous unmanned vehicle that is adapted for use in a stable, particularly for cleaning at least a part of a floor of a cubicle from a row of individual cubicles in a stable, wherein the vehicle comprises a control system for controlling the operation of the vehicle, the control system being arranged to receive a first input signal from an animal presence sensor arranged to detect the presence of an animal in a cubicle, the first input signal being related to the presence of an animal in a first of the cubicles and further related to the presence of an animal in a second of the cubicles neighboring next to the first cubicle, and the control system being arranged to receive a second input signal from a partitions sensor arranged to detect lateral partitions (7, 8, 9) extending in the longitudinal direction between the cubicles, the second input signal being related to the position of the vehicle with respect to at least a common lateral partition (8) between the first and second cubicles, the vehicle further comprising cubicle floor cleaning means under control of the control system for cleaning a part of the cubicle floor, wherein the control system is capable of controlling the cubicle floor cleaning means to clean at least a part of the first cubicle in a cleaning mode, and wherein particulars of the cleaning mode are dependent on the presence of an animal in the second neighboring cubicle.

12. An autonomous unmanned vehicle according to claim 11, wherein the control system is capable of controlling the cubicle floor cleaning means to keep at least a predetermined safety distance ("d") to the second cubicle, and wherein the predetermined safety distance ("d") depends on whether an animal is detected to be present in the second neighboring cubicle.

13. An autonomous unmanned vehicle according to claim 12, wherein if no animal is detected to be present in the second cubicle, the control system is capable of controlling the cubicle floor cleaning means to clean at least a part of the second cubicle besides the at least a part of the first cubicle, in an area from the common lateral partition (8) between the first and second cubicles and extending at most until a predetermined safety distance ("d") from each of second lateral partitions (7, 9) of the first and second cubicles opposite to the common lateral partition (8).

14. An autonomous unmanned vehicle according to claim 13, wherein the control system is capable of centering the cubicle floor cleaning means with respect to the common lateral partition (8).

15. An autonomous unmanned vehicle according to claim 13, wherein the control system is capable of controlling the vehicle to clean at least a part of both the first and second cubicle floor in two cleaning strokes and to move the cubicle floor cleaning means in and out of the first and second cubicles at least two times in the process, and wherein the control system is capable of controlling the cubicle floor cleaning means to clean at least an area comprising at least a part of the first cubicle floor and the floor underneath the common lateral partition (8) in one of the two cleaning strokes, and to clean at least an area comprising at least a part of the second cubicle floor and the floor underneath the common lateral partition (8) in the other of the two cleaning strokes.

## Patentansprüche

1. Verfahren zum Reinigen wenigstens eines Teils eines Bodens einer Box einer Reihe einzelner Boxen (1, 2, 3, 4) in einem Stall, wobei jede Box einen Bodenbereich, ein offenes vorderes Ende (5) für den Zugang eines Tieres (10) in die Box und seitliche Trennwände (7, 8, 9), die sich in der Längsrichtung auf jeder Seite der Box erstrecken, besitzt, wobei das Verfahren die folgenden Schritte umfasst: Bereitstellen einer Sensoranordnung, die einen Tieranwesenheitssensor, der dafür ausgelegt ist, die Anwesenheit eines Tieres in einer Box zu detektieren, und einen Trennwandsensor, der dafür ausgelegt ist, die seitlichen Trennwände (7, 8, 9) zu detektieren, umfasst, und Bereitstellen eines autonomen unbemannten Fahrzeugs, wobei das Fahrzeug ein Steuersystem zum Steuern des Betriebs des Fahrzeugs und Boxbodenreinigungsmittel zum Reinigen eines Teils des Boxbodens umfasst, wobei das Steuersystem mit der Sensoranordnung betriebstechnisch gekoppelt ist, und wobei das Verfahren ferner die folgenden Schritte umfasst: Detektieren durch einen Tieranwesenheitssensor einer ersten der Boxen, in der sich kein Tier befindet, Detektieren durch einen Tieranwesenheitssensor, ob in einer zweiten der Boxen, die zu der ersten Box, in der sich kein Tier befindet, benachbart sind, ein Tier anwesend ist, Erzeugen eines Signals durch den Trennwandsensor für das Steuersystem des Fahrzeugs hinsichtlich der Position des Fahrzeugs in Bezug auf wenigstens eine gemeinsame seitliche Trennwand (8) zwischen der ersten und der zweiten Box, unter Kontrolle des Steuersystems Aktivieren der Boxbodenreinigungsmittel, und Steuern des Fahrzeugs, damit es wenigstens einen Teil des Bodens der ersten Box in einem Reinigungsmodus reinigt, wobei Einzelheiten des Reinigungsmodus von der Anwesenheit eines Tieres in der zweiten benachbarten Box abhängen.

2. Verfahren nach Anspruch 1, wobei der Schritt des Reinigens des Bodens der ersten Box das Aufrechterhalten wenigstens eines vorgegebenen Sicherheitsabstands ("d") zu der zweiten benachbarten Box umfasst, und wobei der vorgegebene Sicherheitsabstand ("d") davon abhängt, ob detektiert wird, dass in der zweiten benachbarten Box ein Tier anwesend ist.

3. Verfahren nach Anspruch 2, wobei dann, wenn detektiert wird, dass in der zweiten benachbarten Box ein Tier anwesend ist, der vorgegebene Sicherheitsabstand ("d") wenigstens 15 % der Breite einer einzelnen Box, vorzugsweise wenigstens 20 %, stärker bevorzugt wenigstens 30 %, höchstens 50 % und vorzugsweise höchstens etwa 45 % der Breite einer einzelnen Box beträgt.

4. Verfahren nach Anspruch 2, wobei dann, wenn detektiert wird, dass in der zweiten benachbarten Box ein Tier anwesend ist, die Sensoranordnung ferner verwendet wird, zu detektieren, ob sich Teile des Tieres in die erste Box erstrecken, und wobei der vorgegebene Sicherheitsabstand ("d") auch davon abhängt, ob detektiert wird, dass Teile des Tieres in der ersten Box anwesend sind.

5. Verfahren nach Anspruch 4, wobei dann, wenn detektiert wird, dass wenigstens ein Teil des Tieres in der ersten Box anwesend ist, die Sensoranordnung ferner verwendet wird, ein Ausmaß zu detektieren, in dem sich der Teil des Tieres in die erste Box erstreckt, und wobei der vorgegebene Sicherheitsabstand ("d") auch von dem detektierten Ausmaß, in dem sich der Teil des Tieres in die erste Box erstreckt, abhängt, und wenigstens die Anforderung erfüllt, größer als das detektierte Ausmaß, in dem sich der Teil des Tieres in die erste Box erstreckt, zu sein.

6. Verfahren nach Anspruch 2, wobei dann, wenn detektiert wird, dass in der zweiten benachbarten Box kein Tier anwesend ist, der vorgegebene Sicherheitsabstand ("d") in einem Bereich von 0 bis 15 % der Breite einer einzelnen Box liegt.

7. Verfahren nach Anspruch 1, wobei dann, wenn detektiert wird, dass in der zweiten benachbarten Box kein Tier anwesend ist, wenigstens ein Teil sowohl des ersten und als auch des zweiten Boxenbodens in einem Bereich gereinigt wird, der sich von der gemeinsamen seitlichen Trennwand (8) zwischen der ersten und der zweiten Box höchstens bis zu einem vorgegebenen Sicherheitsabstand ("d") von jeder der zweiten seitlichen Trennwände (7, 9) der ersten und der zweiten Box gegenüber der gemeinsamen seitlichen Trennwand (8) erstreckt, und wobei der Sicherheitsabstand ("d") gewählt wird, als ob ein Tier in den benachbarten Boxen, die die zweite seitliche Trennwand (7, 9) mit der jeweiligen ersten und zweiten Box gemeinsam haben, anwesend wäre.

8. Verfahren nach Anspruch 7, wobei die Boxbodenreinigungsmittel in Bezug auf die gemeinsame seitliche Trennwand (8) zentriert werden.

9. Verfahren nach Anspruch 7, wobei das autonome unbemannte Fahrzeug gesteuert wird, damit es wenigstens einen Teil sowohl des ersten als auch des zweiten Boxenbodens in zwei Reinigungshüben reinigt, wobei die Boxbodenreinigungsmittel wenigstens zweimal in die erste und die zweite Box hinein- und aus ihnen herausbewegt werden, wobei in einem der beiden Reinigungshübe wenigstens ein Bereich, der wenigstens einen Teil des ersten Boxbodens und der Boden unter der gemeinsamen seitlichen Trennwand (8) umfasst, gereinigt wird und wobei in dem anderen der beiden Reinigungshübe wenigstens ein Bereich, der wenigstens einen Teil des zweiten Boxenbodens und den Boden unter der gemeinsamen seitlichen Trennwand (8) umfasst, gereinigt wird.

10. Verfahren nach einem der Ansprüche 1 bis 9, wobei das Reinigen einer Box das Reinigen des Boxbodens über eine Strecke von dem vorderen Ende bis zu etwa 20 % der Länge der Box, vorzugsweise bis zu etwa 25 % der Länge der Box und stärker bevorzugt bis zu etwa 35 % der Länge der Box umfasst.

11. Autonomes unbemanntes Fahrzeug, das für die Verwendung in einem Stall ausgelegt ist, insbesondere zum Reinigen wenigstens eines Teils eines Bodens einer Box einer Reihe einzelner Boxen in einem Stall, wobei das Fahrzeug ein Steuersystem zum Steuern des Betriebs des Fahrzeugs umfasst, und das Steuersystem dafür ausgelegt ist, ein erstes Eingangssignal von einem Tieranwesenheitssensor zu empfangen, der dafür ausgelegt ist, die Anwesenheit eines Tieres in einer Box zu detektieren, wobei das erste Eingangssignal mit der Anwesenheit eines Tieres in einer ersten der Boxen in Beziehung steht und ferner mit der Anwesenheit eines Tieres in einer zweiten der zu der ersten Box benachbarten Boxen in Beziehung steht, und wobei das Steuersystem dafür ausgelegt ist, ein zweites Eingangssignal von einem Trennwandsensor zu empfangen, der dafür ausgelegt ist, seitliche Trennwände (7, 8, 9) zu detektieren, die sich in der Längsrichtung zwischen den Boxen erstrecken, wobei das zweite Eingangssignal mit der Position des Fahrzeugs in Bezug auf wenigstens eine gemeinsame seitliche Trennwand (8) zwischen der ersten und der zweiten Box in Beziehung steht, wobei das Fahrzeug ferner Boxbodenreinigungsmittel unter Kontrolle des Steuersystems zum Reinigen eines Teils des Boxbodens umfasst, wobei das Steuersystem in der Lage ist, die Boxbodenreinigungsmittel zu steuern, wenigstens einen Teil der ersten Box in einem Reinigungsmodus zu reinigen, und wobei Einzelheiten des Reinigungsmodus von der Anwesenheit eines Tieres in der zweiten benachbarten Box abhängen.

12. Autonomes unbemanntes Fahrzeug nach Anspruch 11, wobei das Steuersystem in der Lage ist, die Boxbodenreinigungsmittel zu steuern, wenigstens einen vorgegebenen Sicherheitsabstand ("d") zu der zweiten Box aufrechtzuerhalten, und wobei der vorgegebene Sicherheitsabstand ("d") davon abhängt, ob detektiert wird, dass in der zweiten benachbarten Box ein Tier anwesend ist.

13. Autonomes unbemanntes Fahrzeug nach Anspruch 12, wobei dann, wenn detektiert wird, dass in der zweiten benachbarten Box kein Tier anwesend ist, das Steuersystem in der Lage ist, die Boxbodenreinigungsmittel zu steuern, wenigstens einen Teil der zweiten Box neben dem wenigstens einen Teil der ersten Box in einem Bereich zu reinigen, der sich von der gemeinsamen seitlichen Trennwand (8) zwischen der ersten und der zweiten Box höchstens bis zu einem vorgegebenen Sicherheitsabstand ("d") von jeder der zweiten seitlichen Trennwände (7, 9) der ersten und der zweiten Box gegenüber der gemeinsamen seitlichen Trennwand (8) erstreckt.

14. Autonomes unbemanntes Fahrzeug nach Anspruch 13, wobei das Steuersystem in der Lage ist, die Boxbodenreinigungsmittel in Bezug auf die gemeinsame seitliche Trennwand (8) zu zentrieren.

15. Autonomes unbemanntes Fahrzeug nach Anspruch 13, wobei das Steuersystem in der Lage ist, das Fahrzeug zu steuern, wenigstens einen Teil sowohl des ersten als auch des zweiten Boxenbodens in zwei Reinigungshüben zu reinigen und die Boxbodenreinigungsmittel dabei wenigstens zweimal in die erste und die zweite Box hinein- und aus ihnen herauszubewegen, und wobei das Steuersystem in der Lage ist, die Boxbodenreinigungsmittel zu steuern, wenigstens einen Bereich, der wenigstens einen Teil des ersten Boxbodens und den Boden unter der gemeinsamen seitlichen Trennwand (8) umfasst, in einem der beiden Reinigungshübe zu reinigen, und wenigstens einen Bereich, der wenigstens einen Teil des zweiten Boxenbodens und den Boden unter der gemeinsamen seitlichen Trennwand (8) umfasst, in dem anderen der beiden Reinigungshübe zu reinigen.

## Revendications

1. Procédé de nettoyage d'au moins une partie du sol d'un box appartenant à une rangée de box individuels (1, 2, 3, 4) dans une étable, chaque box comprenant un espace de sol, une extrémité avant (5) ouverte pour l'accès d'un animal (10) au box et des cloisons latérales (7, 8, 9) s'étendant dans la direction longitudinale de chaque côté du box, le procédé comportant les étapes consistant à mettre en place un agencement de capteurs comportant un capteur de présence d'animal disposé pour détecter la présence d'un animal dans un box et un capteur de cloisons disposé pour détecter les cloisons latérales (7, 8, 9), et à mettre en place un véhicule autonome sans pilote, le véhicule comportant un système de commande servant à commander le fonctionnement du véhicule et des moyens de nettoyage du sol d'un box servant à nettoyer une partie du sol du box, ledit système de commande étant couplé fonctionnellement avec l'agencement de capteurs, et le procédé comportant en outre les étapes consistant à faire détecter par un capteur de présence d'animal un premier des box libre d'animal, à faire détecter par un capteur de présence d'animal si un animal est présent dans un deuxième des box jouxtant le premier box libre d'animal, à faire générer un signal par le capteur de cloisons pour le système de commande du véhicule concernant la position du véhicule par rapport à au moins une cloison latérale (8) commune entre les premier et deuxième box, à activer, sous le contrôle du système de commande, les moyens de nettoyage du sol d'un box, et à commander le véhicule de façon à nettoyer au moins une partie du sol du premier box dans un mode de nettoyage, des spécificités du mode de nettoyage étant fonction de la présence d'un animal dans le deuxième box voisin.

2. Procédé selon la revendication 1, l'étape de nettoyage du sol du premier box comportant le maintien d'au moins une distance de sûreté ("d") prédéterminée au deuxième box voisin, et la distance de sûreté "d" prédéterminée dépendant du fait qu'un animal est détecté ou non comme étant présent dans le deuxième box voisin.

3. Procédé selon la revendication 2, **caractérisé en ce que**, si la présence d'un animal est détectée dans le deuxième box voisin, la distance de sûreté ("d") prédéterminée est d'au moins 15% de la largeur d'un box individuel, et de préférence au moins 20%, et idéalement au moins 30%, et d'au plus 50% de la largeur d'un box individuel, et de préférence au plus environ 45%.

4. Procédé selon la revendication 2, **caractérisé en ce que**, si la présence d'un animal est détectée dans le deuxième box voisin, l'agencement de capteurs est en outre utilisé pour détecter si des parties de l'animal s'étendent jusque dans le premier box, et **en ce que** la distance de sûreté ("d") prédéterminée dépend également du fait que la présence de parties de l'animal est détectée ou non dans le premier box.

5. Procédé selon la revendication 4, **caractérisé en ce que**, si la présence d'au moins une partie d'animal est détectée dans le premier box, l'agencement de capteurs est en outre utilisé pour détecter un degré auquel la partie d'animal s'étend dans le premier box, et **en ce que** la distance de sûreté ("d") prédéterminée dépend également du degré détecté auquel la partie d'animal s'étend dans le premier box, et satisfait au moins une exigence d'être supérieure au degré détecté auquel la partie d'animal s'étend dans le premier box.

6. Procédé selon la revendication 2, **caractérisé en ce que**, si la présence d'aucun animal n'est détectée dans le deuxième box voisin, la distance de sûreté ("d") prédéterminée se situe dans une plage de 0 à 15% de la largeur d'un box individuel.

7. Procédé selon la revendication 1, **caractérisé en ce que**, si la présence d'aucun animal n'est détectée dans le deuxième box voisin, au moins une partie du sol des premier et deuxième box est nettoyée dans une zone partant de la cloison latérale (8) commune entre les premier et deuxième box et s'étendant au plus jusqu'à une distance de sûreté ("d") prédéterminée de chaque cloison parmi des deuxièmes cloisons latérales (7, 9) des premier et deuxième box en face de la cloison latérale (8) commune, et **en ce que** la distance de sûreté ("d") est choisie comme si un animal était présent dans les box voisins ayant la deuxième cloison latérale (7, 9) en commun avec les premier et deuxième box respectifs.

8. Procédé selon la revendication 7, les moyens de nettoyage du sol d'un box étant centrés par rapport à la cloison latérale (8) commune.

9. Procédé selon la revendication 7, le véhicule autonome sans pilote étant commandé de façon à nettoyer au moins une partie du sol des premier et deuxième box en deux courses de nettoyage, les moyens de nettoyage du sol d'un box étant déplacés de façon à entrer et sortir des premier et deuxième box au moins deux fois, **caractérisé en ce que**, lors de l'une des deux courses de nettoyage, au moins une zone comportant au moins une partie du sol du premier box et le sol sous la cloison latérale (8) commune est nettoyée, et **en ce que**, lors de l'autre des deux courses de nettoyage, au moins une zone comportant au moins une partie du sol du deuxième box et le sol sous la cloison latérale (8) commune est nettoyée.

10. Procédé selon l'une quelconque des revendications 1 à 9, le nettoyage d'un box faisant intervenir le nettoyage du sol du box sur une distance de l'extrémité avant pouvant aller jusqu'à environ 20% de la longueur du box, et de préférence jusqu'à environ 25% de la longueur du box, et idéalement jusqu'à environ 35% de la longueur du box.

11. Véhicule autonome sans pilote prévu pour être utilisé dans une étable, particulièrement pour nettoyer au moins une partie du sol d'un box appartenant à une rangée de box individuels dans une étable, le véhicule comportant un système de commande servant à commander le fonctionnement du véhicule, le système de commande étant disposé pour recevoir un premier signal d'entrée provenant d'un capteur de présence d'animal disposé pour détecter la présence d'un animal dans un box, le premier signal d'entrée étant lié à la présence d'un animal dans un premier des box et lié en outre à la présence d'un animal dans un deuxième des box jouxtant le premier box, et le système de commande étant disposé pour recevoir un deuxième signal d'entrée from un capteur de cloisons disposé pour détecter cloisons latérales (7, 8, 9) s'étendant dans la direction longitudinale entre les box, le deuxième signal d'entrée étant lié à la position du véhicule par rapport à au moins une cloison latérale (8) commune entre les premier et deuxième box, le véhicule comportant en outre des moyens de nettoyage du sol d'un box sous le contrôle du système de commande servant à nettoyer une partie du sol du box, le système de commande étant capable de commander les moyens de nettoyage du sol d'un box de façon à nettoyer au moins une partie du premier box dans un mode de nettoyage, et des spécificités du mode de nettoyage étant fonction de la présence d'un animal dans le deuxième box voisin.

12. Véhicule autonome sans pilote selon la revendication 11, le système de commande étant capable de commander les moyens de nettoyage du sol d'un box de façon à maintenir au moins une distance de sûreté ("d") prédéterminée au deuxième box, et la distance de sûreté "d" prédéterminée dépendant du fait qu'un animal est détecté ou non comme étant présent dans le deuxième box voisin.

13. Véhicule autonome sans pilote selon la revendication 12, **caractérisé en ce que**, si la présence d'aucun animal n'est détectée dans le deuxième box, le système de commande est capable de commander les moyens de nettoyage du sol d'un box de façon à nettoyer au moins une partie du deuxième box outre le partie au moins du premier box, dans une zone partant de la cloison latérale (8) commune entre les premier et deuxième box et s'étendant au plus jusqu'à une distance de sûreté ("d") prédéterminée de chaque cloison parmi des deuxièmes cloisons latérales (7, 9) des premier et deuxième box en face de la cloison latérale (8) commune.

14. Véhicule autonome sans pilote selon la revendication 13, le système de commande étant capable de centrer les moyens de nettoyage du sol d'un box par rapport à la cloison latérale (8) commune.

15. Véhicule autonome sans pilote selon la revendication 13, le système de commande étant capable de commander le véhicule de façon à nettoyer au moins une partie du sol des premier et deuxième box en deux courses de nettoyage et à déplacer les moyens de nettoyage du sol d'un box de façon à entrer et sortir des premier et deuxième box au moins deux fois au cours du processus, et le système de commande étant capable de commander les moyens de nettoyage du sol d'un box de façon à nettoyer au moins une zone comportant au moins une partie du sol du premier box et le sol sous la cloison latérale (8) commune lors de l'une des deux courses de nettoyage, et à nettoyer au moins une zone comportant au moins une partie du sol du deuxième box et le sol sous la cloison latérale (8) commune lors de l'autre des deux courses de nettoyage.
